# EUROPÄISCHE PATENTSCHRIFT

(11) **EP 3 322 624 B1**
(45) Veröffentlichungstag und Bekanntmachung des Hinweises auf die Patenterteilung: **11.09.2019**
(21) Anmeldenummer: 16741285.7
(22) Anmeldetag: 15.07.2016
(51) Int. Cl.: B60T 17/02, F15B 21/04

(54) **VERFAHREN UND VORRICHTUNG ZUR STEUERUNG EINER GERÄUSCHARMEN DRUCKLUFTAUFBEREITUNG**
METHOD AND DEVICE FOR CONTROLLING QUIET COMPRESSED-AIR TREATMENT
PROCÉDÉ ET DISPOSITIF DE COMMANDE D'UN SYSTÈME DE CONDITIONNEMENT D'AIR COMPRIMÉ SILENCIEUX

(30) Priorität: 16.07.2015 DE 102015111516
(43) Veröffentlichungstag der Anmeldung: 23.05.2018
(73) Patentinhaber: KNORR-BREMSE Systeme für Nutzfahrzeuge GmbH, 80809 München (DE)
(72) Erfinder: KRESS, Hartmut, 85757 Karlsfeld (DE)
(86) Internationale Anmeldenummer: PCT/EP2016/066856
(87) Internationale Veröffentlichungsnummer: WO 2017/009444

(56) Entgegenhaltungen:
- EP-A2- 2 492 118
- DE-A1-102006 023 681
- DE-A1-102008 045 713

## Beschreibung

Die vorliegende Erfindung betrifft eine Vorrichtung und ein Verfahren zur Steuerung einer Druckluftaufbereitung für zumindest eine Drucklufteinrichtung in einem Fahrzeug. Die Erfindung betrifft außerdem ein Computerprogramm mit Codemitteln zur Ausführung der Schritte des vorgenannten Verfahrens auf einem Computersystem, und ein computerlesbares Speichermedium, auf dem ein Programmcode mit den Codemitteln des Computerprogramms gespeichert ist.

Bei einer elektronischen Luftaufbereitung (EAC) in Fahrzeugen, insbesondere Nutzfahrzeugen, können pneumatische Funktionen eines Bremssystems mit intelligenter Elektronik kombiniert sein. Beispielsweise können die Funktionen eines Lufttrockners, eines Druckreglers und eines Vierkreisschutzventil kombiniert und in einem Gerät integriert sein. Ein solches kompaktes System lässt sich dann einfach installieren, bietet eine höhere Funktionalität und führt zu einer Kraftstoffeinsparung von mehreren hundert Litern pro Jahr.

So kann ein EAC-System bspw. mit einer elektronischen
Intelligenz ausgestaltet sein und für Reinigung, Trocknung und Verteilung der gefilterten Druckluft im Bremssystem und für ein kontinuierliches aktives, intelligentes Luftmanagement zuständig sein. Benötigt das Bremssystem mehr Luft, steuert das EAC den Füllvorgang der Luftbehälter für Bremse und Nebenverbraucher in einer vorbestimmten Reihenfolge. Während der Auffüllung der Kreise sind diese gegeneinander über Überströmventile und Rückschlagventile abgesichert. Das Überschreiten eines maximalen Drucks wird durch Überdruckventile verhindert. Unterschiedliche Druckniveaus einzelner Kreise werden durch Druckbegrenzer sichergestellt. Durch das intelligente Steuerungskonzept ist kein zusätzlicher Luftbehälter für die Feststellbremse oder Anhängerversorgung erforderlich.

Ein Herzstück des EAC-Systems ist seine Prozessorsteuerung mit intelligenter Software. Informationen von Drucksensoren und von einem CAN-Datenbus des Fahrzeugs können für die Verteilung der Druckluft und eine optimale Steuerung des Bremssystems in allen Fahrsituationen eingesetzt werden.

In den Patentschriften EP 2 492 118 A2 und DE 10 2006 023 681 A1 ist jeweils ein Verfahren zum Betreiben einer Druckluftaufbereitungsanlage offenbart. Diese umfassen dabei wenigstens eine Druckquelle zur Erzeugung von Druckluft, einen Lufttrockner zur Trocknung der Luft, eine Elektronik zur Steuerung der Anlage, zumindest einen Druckluftspeicher und ein von der Elektronik steuerbares Ventil, das bei Betätigung den Systemdruck reduziert. Beide Verfahren messen die Luftfeuchtigkeit der Luft des Systems und öffnen das steuerbare Ventil in Abhängigkeit der Luftfeuchtigkeit.

In herkömmlichen Druckluftaufbereitungssystemen ergibt sich allerdings das Problem eines hohen Schalldruckpegels beim Abschaltvorgang, also dem sogenannten Entlüften des Systems. Hierbei werden die Kompressorzuleitung und weitere Druckluft enthaltende Volumina, wie z.B. eine Lufttrocknerpatrone, gegen Atmosphärendruck entlüftet, was zu einer störenden Geräuschentwicklung führt. Dies geschieht durch An- und Abschalten eines 3/2-Wege-Ventils in Verbindung mit einer dieses Ventil kontinuierlich vom Beginn bis zum Ende des Abschaltvorgangs steuernden Magnetventilansteuerung.

Aus der DE 10 2008 045 713 B4 ist eine Drucklufteinrichtung für ein Fahrzeug bekannt, mit zwei Kreisen mit unterschiedlichen Drücken und mit wenigstens einem vom Kreis mit dem höheren Druck über wenigstens eine Ventileinrichtung beaufschlagbaren Druckluftverbraucher, wobei ein Entlüftungsanschluss der Ventileinrichtung und/oder ein Entlüftungsanschluss des Druckluftverbrauchers an den Kreis mit niedrigerem Druck angeschlossen ist, welcher mit einer durch ein bewegliches Element begrenzten Druckkammer eines Sammelbehälters in Verbindung steht, und die Druckkammer mit einer Saugseite eines Luftkompressors verbunden ist, dessen Druckseite mittelbar oder unmittelbar mit einem Druckanschluss der wenigstens einen Ventileinrichtung in Verbindung steht. Dabei ist der Sammelbehälter derart ausgeführt, dass seine Druckkammer in einem druckbeaufschlagten Zustand unter einem von der Entlüftung der Ventileinrichtung und/oder des wenigstens einen Druckluftverbrauchers herrührenden Entlüftungsdruck steht, der größer als der Atmosphärendruck ist. Da aber die Ventileinrichtung den Kreis mit dem niedrigeren Druck und damit auch die Druckkammer des Sammelbehälters beim Entlüften gegen die Umgebung absperrt, kann dieser Entlüftungsdruck in dem Kreis mit dem niedrigeren Druck annähernd konstant gehalten werden. Durch die Rückgewinnung von Luft aus dem Kreis höheren Drucks in den Kreis niedrigeren Drucks dringen die Entlüftungsgeräusche der Ventileinrichtung nicht mehr in die Umgebung, weil die abgelassene Druckluft nicht mehr ins Freie entweicht, sondern in den Kreis niedrigeren Drucks rückgeführt wird, so dass Schalldämpfer entfallen und gesetzliche Lärmbegrenzungsvorschriften ohne zusätzlichen Aufwand eingehalten werden können.

Der vorliegenden Erfindung liegt die Aufgabe zugrunde, die mit der Entlüftung eines elektronischen Druckluftaufbereitungssystems verbundene Geräuschentwicklung mit alternativen Mitteln ohne Zweikreissystem mit Luftrückführung zu verringern.

Diese Aufgabe wird durch die Merkmale der Vorrichtung und des Verfahrens gemäß den unabhängigen Ansprüchen gelöst.

Weitere vorteilhafte Ausgestaltungen und Weiterbildungen der Erfindung ergeben sich aus den abhängigen Ansprüchen.

Im Rahmen dieser Beschreibung kann eine Steuereinrichtung zur Steuerung der Druckluftaufbereitung als Software, Hardware oder Kombination aus Software und Hardware implementiert sein. Sie kann eine oder mehrere Schnittstellen aufweisen, um geeignete Daten mit anderen Einrichtungen des Fahrzeugs austauschen zu können. Die Steuereinrichtung kann als ein oder mehrere Module und/oder Prozesse und/oder Objekte und/oder Threads implementiert sein.

Erfindungsgemäß wird also eine Ventileinrichtung zum schrittweisen Abschalten eines Entlüftungsvorgangs im Ansprechen auf ein Erreichen vorbestimmter Druckwerte und zum jeweiligen Wiedereinschalten des Entlüftungsvorgangs nach Ablauf einer vorbestimmten Zeitdauer gesteuert. Im Einzelnen ist die Vorrichtung also ausgestaltet zum mehrfachen Abschalten und Wiedereinschalten des Entlüftungsvorgangs bei Erreichen aufeinanderfolgender vorbestimmter Druckwerte, vorzugsweise kleiner werdender Druckwerte, des Entlüftungsdrucks bis zum Erreichen einer vorbestimmten unteren Druckgrenze. Die zur Steuerung der Ab- und Wiedereinschaltvorgänge erforderlichen Daten können dabei voreingestellt sein oder aus vergangenen oder aktuellen Messdaten gewonnen werden.

Durch diesen schrittweisen Entlüftungsvorgang kann erreicht werden, dass sich kein zu hoher Schalldruck aufbaut und somit das unerwünschte Entlüftungsgeräusch verringert wird. Der vollständige Druckabbau bei der Entlüftung erfolgt also durch wenigstens zwei Teildruckentlüftungen ohne wesentliche Entlüftungszeitverlängerung. Bei höherer Anzahl von Ab- und Widereinschaltvorgängen kann der Schalldruck durch Festlegung der vorbestimmten sukzessiven Druckwerte, vorzugsweise der abnehmenden Druckwerte, in einem beliebigen vorgegebenen Rahmen gehalten werden.

Gemäß einer bevorzugten Weiterbildung kann die Ventileinrichtung mittels eines zeitmodulierten Signals angesteuert werden, dessen Einschaltzeit der Einschaltdauer der Ventileinrichtung entspricht. Die Steuerung kann dadurch mittels geeigneter Einstellung der Einschaltzeit des zeitmodulierten Signals erfolgen.

Als alternative bevorzugte Weiterbildung kann die Vorrichtung einen Zeitgeber zum Messen einer dem Druckabfall beim Entlüftungsvorgang entsprechenden Zeitdauer umfassen, wobei die Vorrichtung ausgestaltet ist, die gemessene Zeitdauer zur Ermittlung eines Druckabfalls beim Entlüftungsvorgang heranzuziehen. Die Steuerung kann somit ausgehend von einer einfachen Zeitmessung unter Kenntnis des Druckverlaufs beim Entlüftungsvorgang erfolgen.

Als weitere alternative bevorzugte Weiterbildung kann die Vorrichtung einen Temperatursensor zum Messen einer dem Druckabfall beim Entlüftungsvorgang entsprechenden Temperatur umfassen, wobei die Vorrichtung ausgestaltet ist, die gemessene Temperatur zur Ermittlung eines Druckabfalls beim Entlüftungsvorgang heranzuziehen. Die Steuerung kann somit ausgehend von einer einfachen Temperaturmessung der Druckluft beim Entlüftungsvorgang erfolgen.

Als weitere alternative vorteilhafte Weiterbildung kann die Vorrichtung einen Schalldrucksensor zum Messen eines dem Druckabfall beim Entlüftungsvorgang entsprechenden Schalldrucks umfassen, wobei die Vorrichtung ausgestaltet ist, den gemessenen Schalldruck zur Ermittlung eines Druckabfalls beim Entlüftungsvorgang heranzuziehen. Die Steuerung kann somit ausgehend von einer direkten Schalldruckmessung beim Entlüftungsvorgang erfolgen.

Als weitere alternative vorteilhafte Weiterbildung kann die Vorrichtung einen Drucksensor zum Messen eines Luftdrucks beim Entlüftungsvorgang umfassen, wobei die Vorrichtung ausgestaltet ist, den gemessenen Luftdruck zur Ermittlung eines Druckabfalls beim Entlüftungsvorgang heranzuziehen. Die Steuerung kann somit ausgehend von einer Luftdruckmessung beim Entlüftungsvorgang erfolgen.

Vorzugsweise kann die Vorrichtung ausgestaltet sein zum dauerhaften Einschalten der Ventilvorrichtung im Ansprechen auf ein Erreichen der unteren Druckgrenze, bis im Wesentlichen kein Überdruck mehr vorhanden ist.

Ferner betrifft die Erfindung ein computerlesbares Speichermedium, auf dem ein auf einem Computersystem ausführbarer Programmcode gespeichert ist, welcher die Schritte des vorgenannten Verfahrens erzeugt bzw. implementiert.

Des Weiteren betrifft die Erfindung ein Computerprogramm mit Codemitteln, die bei deren Ausführung auf einem Computersystem die Schritte des vorgenannten Verfahrens erzeugen bzw. implementieren.

Die Erfindung wird nachfolgend anhand von Ausführungsbeispielen unter Bezugnahme auf die beigefügten Zeichnungsfiguren näher erläutert. Es zeigen:
- Fig. 1: ein schematisches Blockschaltbild eines Druckluftaufbereitungssystems gemäß einem Ausführungsbeispiel;
- Fig. 2: zwei Zeitdiagramme mit Druckverläufen, Schalldruckverläufen und Ventilschaltverläufen bei einer Steuerung gemäß dem Ausführungsbeispiel; und
- Fig. 3: ein Flussdiagramm eines Steuerverfahrens gemäß einem zweiten Ausführungsbeispiel.

Es folgt eine Beschreibung vorteilhafter Ausführungsbeispiele anhand eines beispielhaften Druckluftaufbereitungssystems für ein Nutzfahrzeug.

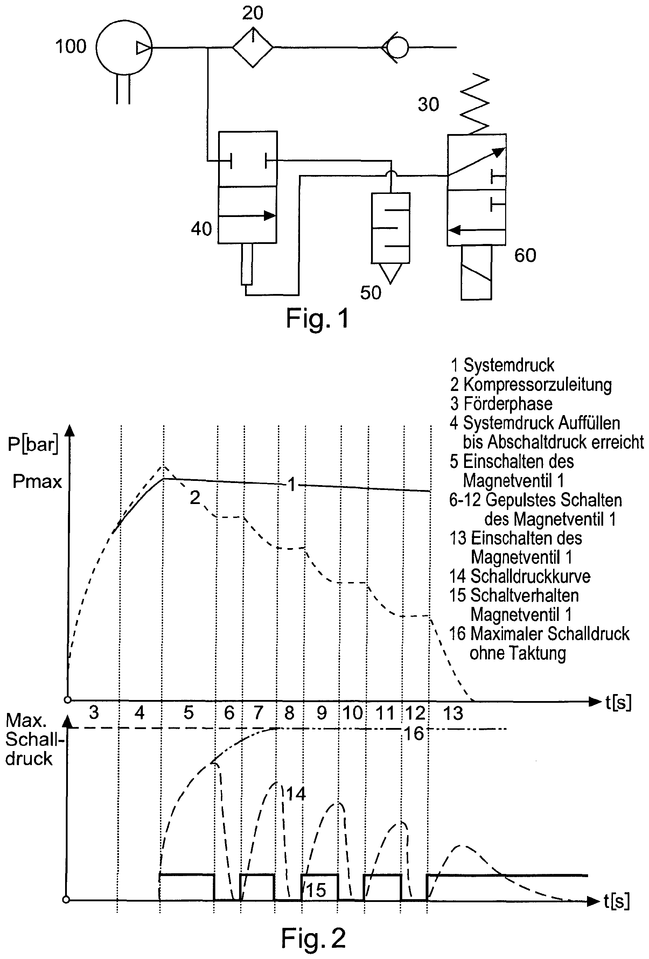

Fig. 1 zeigt ein schematisches Blockschaltbild eines Druckluftaufbereitungssystems gemäß einem ersten Ausführungsbeispiel für ein Nutzfahrzeug. Die erzeugte Druckluft kann beispielsweise für eine elektro-pneumatische Bremseinrichtung und/oder eine Luftfederungseinrichtung verwendet werden.

Vorratsluftbehälter (nicht gezeigt) stehen über Druckluftleitungen mit dem Druckluftaufbereitungssystem in Verbindung, welches die von der Druckseite eines Luftkompressors 100 über eine Druckluftleitung zugeführte Druckluft mittels einer Lufttrocknerpatrone 20 reinigt und sie dabei insbesondere von Feuchtigkeit, Öl und Schmutz befreit. Das Druckluftaufbereitungssystem umfasst weiterhin einen Druckregler 40, der hier beispielhaft als 2/2-Wegeventil aufgebaut ist und die von der Druckseite des Luftkompressors 100 herangeführte Druckluft durch Luftabgabe über einen Schalldämpfer 50 an die Umgebung auf einen Solldruck regelt, der auch in den Vorratsbehältern herrscht. Die Druckluftleitung von der Lufttrocknerpatrone 20 zu den Vorratsbehältern ist mittels eines Rückschlagventils 30 abgesichert.

Gemäß dem ersten Ausführungsbeispiel ist ein über eine nicht gezeigte Steuereinrichtung elektronisch gesteuertes Magnetventil 60 vorgesehen, das bspw. als 3/2-Wegeventil aufgebaut ist und zur Steuerung des Betriebs des Druckreglers 40 ausgestaltet ist. Je nach Stellung des Magnetventils 60 wird der Druckregler 40 in eine druckablassende Entlüftungsstellung oder eine druckhaltende Sperrstellung gesteuert.

Während eines Abschaltvorgangs baut sich zu Beginn eines Entlüftungsvorgangs entsprechend der Strömungszunahme am Schalldämpfer 50 am Luftablassstutzen ein Schalldruck auf. Dies basiert auf dem physikalischen Effekt der Geschwindigkeitszunahme des Massenstroms. Um ein übermäßiges Ansteigen des Schalldrucks zu vermeiden, wird nun eine dem Druckverlauf oder dem Druckabfall beim Entlüftungsvorgang entsprechende Information bspw. mittels eines Sensors erfasst oder aus einem Speicher (bspw. anhand eines gespeicherten Kennfelds, einer Speichertabelle odgl.) ausgelesen und der Steuereinrichtung zugeführt. Diese ermittelt daraus den aktuellen Druckwert und steuert das Magnetventil 60 zum vorübergehenden Abschalten des Entlüftungsvorgangs, sobald ein vorbestimmter Druckwert erreicht wurde. Dadurch wird ein weiterer Anstieg des Schalldrucks vermieden. Nach einer vorbestimmten Zeitdauer wird der Entlüftungsvorgang dann wieder durch entsprechendes Ansteuern des Magnetventils 60 aufgenommen und der Druckabbau fortgesetzt bis eine untere Druckgrenze erreicht wurde. Je nach gewünschtem Schalldruckpegel bzw. Anfangsdruckhöhe bzw. gewünschter Entlüftungsdauer kann der Abschalt- und Wiederaufnahmevorgang des Entlüftungsvorgangs beliebig oft wiederholt werden. Es können bspw. auch vorbestimmte Parameter für gewünschte Entlüftungszeiten und -häufigkeiten voreingestellt sein, die eine zeitliche Steuerung der schrittweisen Entlüftung ohne weitere Messung von Druckwerten ermöglichen.

Somit wird zur Vermeidung eines übermäßigen Schalldruckaufbaus ein vorbestimmter Druckabfall oder Druckunterschied gegenüber dem zu Beginn eines Entlüftungsvorgangs vorliegenden Anfangsdruck festgelegt, bei dem der Entlüftungsvorgang für eine vorbestimmte Zeitdauer beendet wird. Dieser Wert und die vorbestimmte Unterbrechungszeitdauer können bspw. für verschiedene Systemparameter wie bspw. Systemdruck, max. Schalldruck, Entlüftungsdauer, etc. in einem von der Steuereinrichtung zugreifbaren Tabellenspeicher oder Kennfeld gespeichert sein.

Im Falle einer optionalen direkten bzw. indirekten Druckmessung kann zur Bestimmung des aktuellen Druckwerts während des Entlüftungsvorgangs bspw. ein Temperatursensor, ein Zeitsensor (Zeitgeber), ein Schalldrucksensor oder ein Luftdrucksensor dienen. Da alle entsprechenden Messwerte mit dem am Schalldämpfer 50 anliegenden Luftdruck zumindest korreliert sind, kann die Steuereinrichtung anhand dieser Messinformation den aktuellen Druck während des Entlüftungsvorgangs ermitteln und das Magnetventil 60 entsprechend zum Einschalten und Abschalten des Entlüftungsvorgangs ansteuern. Wie bereits erwähnt, kann die Steuerung des vorgeschlagenen geräuscharmen schrittweisen Entlüftungsvorgangs jedoch auch anhand gespeicherten Parameterwerte als Vorgabewerte ohne Druckmessung erfolgen. Die Steuereinrichtung kann bspw. anhand der Messinformation oder der gespeicherten Vorgabeinformation eine Einschaltzeit eines zeitmodulierten Signals ermitteln und mit diesem Signal das Magnetventil 60 ansteuern, so dass eine vorbestimmte Anzahl von Teilentlüftungsvorgängen mit vorbestimmten Ein- und Ausschaltzeiten durchgeführt wird. Abhängig von der jeweiligen Einschaltzeit wird somit bei jedem Entlüftungsvorgang immer nur ein definierter Druckunterschied erzielt und eine entsprechende Luftmenge abgeleitet, welche jeweils keine Überschreitung des gewünschten maximalen Schalldruckpegels hervorruft. Im Ergebnis kann somit ein vollständiger Druckabbau durch mehrere Teilentlüftungen erreicht werden. Die Zahl der Teilentlüftungen (Impulse) ergibt sich dann aus dem Kompromiss zwischen Entlüftungsdauer und gewünschtem maximalen Schalldruckpegel.

Wenn eine untere Druckgrenze erreicht ist, bei der kein weiterer Anstieg des Schalldruckpegels zu erwarten ist, kann die Steuereinrichtung das Magnetventil 60 dauerhaft einschalten bis sich der Überdruck im Wesentlichen abgebaut hat.

Die Steuerung des Entlüftungsvorgangs kann basierend auf einer Funktionalität oder Logik erfolgen, die die Anzahl notwendiger Entlüftungsstöße bspw. abhängig von vorbestimmten Spezifikationsgrenzen und/oder unter Verwendung eines Kennfeldes wie bspw. des eines Schalldruck-Entlüftungsdauer-Kennfelds steuert. Ferner kann die Art und Frequenz der für den schrittweisen Entlüftungsvorgang benötigten Ansteuersequenz auch von geometrischen Eigenschaften, wie bspw. den Querschnitten im Entlüftungskanal vor dem Schalldämpfer odgl., abhängig sein.

Fig. 2 zeigt zwei Zeitdiagramme mit beispielhaftem Systemdruckverlauf 1 und Kompressorzuleitungsdruckverlauf 2 (oberes Diagramm) sowie Schalldruckverlauf 14, Schaltsignalverlauf 15 des Magnetventils 60 und Maximalschalldruckverlauf 16 ohne erfindungsgemäße Taktung (unteres Diagramm).

Der Schaltsignalverlauf 15 zeigt die zeitliche Einteilung der Ein- uns Ausschaltvorgänge des Magnetventils 60, wobei das Magnetventil 60 für die Dauer der Impulse eingeschaltet und damit der Druckregler 40 zur Teilentlüftung aktiviert ist. Der gesamte Druckabbau erfolgt also hier beispielhaft durch fünf Teilentlüftungen, wobei die Schalldruckkurve 14 mit jedem Teilentlüftungsvorgang einen stetig abnehmenden maximalen Schalldruck zeigt. Anhand des Kompressorzuleitungsverlaufs 2 ist erkennbar, dass der Druck in der Zuleitung des Kompressors während des Einschaltens des Magnetventils 60 abfällt und während der Impulspausen des Schaltverlaufs 15 konstant bleibt. Dementsprechend baut sich der Schalldruckpegel gemäß dem Schalldruckverlauf 14 während dieser Impulspausen wieder ab und kann somit unterhalb eines gewünschten maximalen Pegels gehalten werden.

Die auf der horizontalen Zeitachse gekennzeichneten Zeitperioden entsprechen einer anfänglichen Förderphase 3 für den Aufbau des Systemdrucks, gefolgt von einer Auffüllphase 4 des Auffüllen des Systemdrucks bis zum Erreichen eines Abschaltdrucks und Einleiten einer ersten Einschaltphase 5 des Magnetventils 60. Nun beginnt der gepulste Teilentlüftungsvorgang mit den gepulsten Schaltphasen 6 bis 12 und der Dauereinschaltphase 13 des Magnetventils 60, bis der Druck vollständig abgebaut ist.

Die strichpunktierte Linie zeigt den Verlauf 16 des maximalen Schalldrucks bei herkömmlicher nicht getakteter Abschaltung.

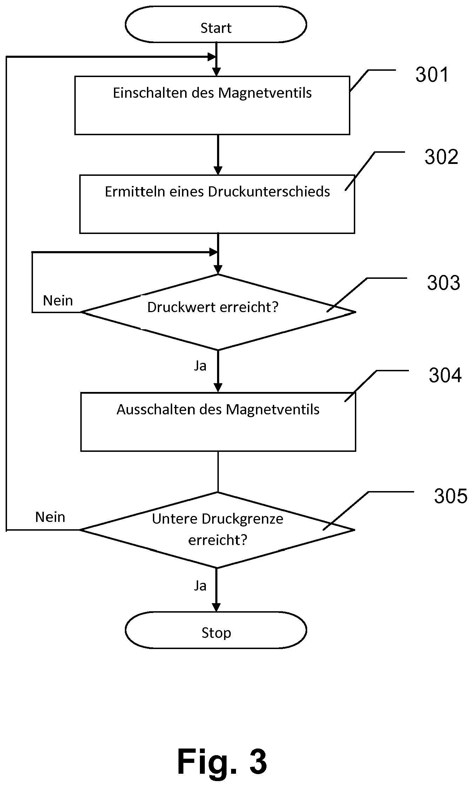

Fig. 3 zeigt ein Flussdiagramm eines Entlüftungssteuerverfahrens gemäß einem zweiten Ausführungsbeispiel, das beispielsweise in der Steuereinrichtung als Software zur Computersteuerung implementiert werden kann.

Der Programmstart wird bspw. nach Erreichen eines Abschaltdrucks eingeleitet. Im Schritt 301 wird das Magnetventil 60 eingeschaltet. Danach wird im Schritt 302 anhand einer Speichertabelle oder eines Algorithmus ein erster vorbestimmter Druckunterschied zur Begrenzung des Schalldruckpegels ermittelt und im Schritt 303 anhand der von einem Sensor erhaltenen Messinformation (z.B. Zeitintervall, Temperaturwert, Schalldruckwert, Luftdruckwert) oder einer voreingestellten Speicherinformation festgestellt, ob der gewünschte Druckunterschied erreicht wurde oder nicht. Falls nicht, wird der Schritt 303 solange wiederholt, bis der ermittelte Druckunterschied erreicht wurde. Wenn der Druckunterschied erreicht wurde, schreitet der Ablauf zum Schritt 304 und das Magnetventil 60 wird für eine vorbestimmte Zeitdauer ausgeschaltet. Danach wird im Schritt 305 geprüft, ob eine vorbestimmte untere Druckgrenze erreicht ist. Falls nicht, springt der Ablauf zurück zum Schritt 301 und das Magnetventil 60 wird erneut eingeschaltet und die zweite Teilentlüftung wird eingeleitet. Sobald im Schritt 305 festgestellt wird, dass die untere Druckgrenze erreicht wurde, endet der Steuerungsprozess der stufenweisen Entlüftung.

In den vorstehend beschriebenen Ausführungsbeispielen muss für die durch die Zahl der Teilentlüftungen verlängerte Entlüftungszeit für das Ablassventil keine Maximalgrenze vorgesehen sein. Es kann aber eine zeitliche Einschränkung dahingehend vorgesehen sein, dass der gesamte Entlüftungsvorgang auf eine maximale Entlüftungsdauer von bspw. 10s eingeschränkt ist. Diese maximale Entlüftungsdauer schließt die als "dauerhaft" bezeichnete letzte Teilentlüftung ein, die damit ebenfalls eine endliche Zeitdauer aufweist.

Die Anzahl von Entlüftungsstößen (Teilentlüftungen) des vorgeschlagenen schrittweisen Entlüftungsvorgangs ist durch die Erfordernisse des gewünschten maximalen Schalldrucks und der gewünschten maximalen Entlüftungsdauer nach unten bzw. oben begrenzt.

Ferner können die Entlüftungsstöße gleichlang oder variabel sein. Länger werdende Entlüftungsstöße können aufgrund des abfallenden Schalldrucks vorteilhaft sein.

Zusammenfassend wurden eine Vorrichtung und ein Verfahren zur Steuerung eines Luftaufbereitungssystems in einem Fahrzeug beschrieben, wobei eine Ventileinrichtung zum schrittweisen Abschalten eines Entlüftungsvorgangs im Ansprechen auf ein Erreichen vorbestimmter Druckwerte und zum jeweiligen Wiedereinschalten des Entlüftungsvorgangs nach Ablauf einer vorbestimmten Zeitdauer gesteuert wird. Dabei kann das Abschalten und Wiedereinschalten des Entlüftungsvorgangs mehrfach erfolgen bei Erreichen aufeinanderfolgender, vorzugsweise kleiner werdender, vorbestimmter Druckwerte des Entlüftungsdrucks bis zum Erreichen einer vorbestimmten unteren Druckgrenze.

Die Steuervorrichtung für die Druckluftaufbereitung kann durch eine programmgesteuerte Computereinrichtung realisiert sein, bei der die Schritte der Fig. 3 und auch die Verarbeitung der Steuerdaten in Steuerbefehle oder Steuersignale für das Magnetventil oder eine beliebige andere Ventileinrichtung mittels eines Computerprogramms gesteuert wird, das beispielsweise auf einem computerlesbaren Speichermedium gespeichert ist oder über ein Netzwerk wie beispielsweise das Internet oder ein lokales Netz herunterladbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### BEZUGSZEICHENLISTE

- 1: Systemdruckverlauf
- 2: Kompressorzuleitungsdruckverlauf
- 3: Förderphase
- 4: Auffüllphase
- 5: erste Einschaltphase
- 6-12: gepulste Schaltphasen des Ventils
- 13: Dauereinschaltphase des Ventils
- 14: Schalldruckverlauf
- 15: Schaltverlauf des Ventils
- 20: Lufttrocknerpatrone
- 30: Rückschlagventil
- 40: Druckregler
- 50: Schalldämpfer
- 60: Magnetventil
- 100: Kompressor
- 301-205: Schritte des Steuerverfahrens

## Patentansprüche

1. Vorrichtung zur Steuerung eines Luftaufbereitungssystems in einem Fahrzeug, wobei die Vorrichtung ausgestaltet ist zum Steuern einer Ventileinrichtung (60) zum mehrfachen Abschalten und Wiedereinschalten des Entlüftungsvorgangs bei Erreichen aufeinanderfolgender, vorzugsweise kleiner werdender, vorbestimmter Druckwerte des Entlüftungsdrucks bis zum Erreichen einer vorbestimmten unteren Druckgrenze, wobei
die Vorrichtung derart konfiguriert ist, dass der Druckabbau bei dem Entlüftungsvorgang durch wenigstens zwei Teildruckentlüftungen ohne wesentliche Entlüftungszeitverlängerung erfolgt.

2. Vorrichtung nach Anspruch 1, wobei die Vorrichtung ausgestaltet ist zum Durchführen des mehrfachen Abschaltens und Wiedereinschaltens des Entlüftungsvorgangs mit einer auf gespeicherten Messdaten aus der Vergangenheit basierenden Zeitsteuerung.

3. Vorrichtung nach Anspruch 1 oder 2, wobei die Vorrichtung ausgestaltet ist zum Ansteuern der Ventileinrichtung (60) mittels eines zeitmodulierten Signals, dessen Einschaltzeit einer Einschaltdauer der Ventileinrichtung (60) entspricht.

4. Vorrichtung nach einem der vorgenannten Ansprüche, des Weiteren umfassend einen I Zeitgeber zum Messen einer Zeitdauer seit Beginn des Entlüftungsvorgangs, wobei die Vorrichtung ausgestaltet ist, die gemessene Zeitdauer zur Ermittlung eines Druckabfalls beim Entlüftungsvorgang heranzuziehen.

5. Vorrichtung nach einem der Ansprüche 1 bis 3, des Weiteren umfassend einen Temperatursensor zum Messen einer einem Druckabfall beim Entlüftungsvorgang entsprechenden Temperatur, wobei die Vorrichtung ausgestaltet ist, die gemessene Temperatur zur Ermittlung des Druckabfalls beim Entlüftungsvorgang heranzuziehen.

6. Vorrichtung nach einem der Ansprüche 1 bis 3, des Weiteren umfassend einen Schalldrucksensor zum Messen eines einem Druckabfall beim Entlüftungsvorgang entsprechenden Schalldrucks, wobei die Vorrichtung ausgestaltet ist, den gemessenen Schalldruck zur Ermittlung des Druckabfalls beim Entlüftungsvorgang heranzuziehen.

7. Vorrichtung nach einem der Ansprüche 1 bis 3, des Weiteren umfassend einen Drucksensor zum Messen eines Luftdrucks beim Entlüftungsvorgang umfasst, wobei die Vorrichtung ausgestaltet ist, den gemessenen Luftdruck zur Ermittlung eines Druckabfalls beim Entlüftungsvorgang heranzuziehen.

8. Vorrichtung nach einem der vorgenannten Ansprüche, wobei die Vorrichtung ausgestaltet ist zum dauerhaften Einschalten der Ventilvorrichtung (60) im Ansprechen auf ein Erreichen der unteren Druckgrenze.

9. Luftaufbereitungssystem für ein Fahrzeug, mit einer Vorrichtung nach einem der Ansprüche 1 bis 8 und der Ventileinrichtung (60).

10. Luftaufbereitungssystem nach Anspruch 9, wobei die Ventileinrichtung (60) zum Steuern eines Druckreglers (40) für den Entlüftungsvorgang ausgestaltet ist.

11. Verfahren zur Steuerung eines Luftaufbereitungssystems in einem Fahrzeug, mit dem Schritt des Steuerns einer Ventileinrichtung (60) zum mehrfachen Abschalten und Wiedereinschalten des Entlüftungsvorgangs bei Erreichen aufeinanderfolgender, vorzugsweise kleiner werdender, vorbestimmter Druckwerte des Entlüftungsdrucks bis zum Erreichen einer vorbestimmten unteren Druckgrenze, wobei
der Druckabbau bei der Entlüftungsvorgang durch wenigstens zwei Teildruckentlüftungen ohne wesentliche Entlüftungszeitverlängerung erfolgt.

12. Verfahren nach Anspruch 11, des Weiteren umfassend den Schritt des Durchführens des mehrfachen Abschaltens und Wiedereinschaltens des Entlüftungsvorgangs mit einer auf gespeicherten Messdaten aus der Vergangenheit basierenden Zeitsteuerung.

13. Verfahren nach Anspruch 11 oder 12, des Weiteren umfassend den Schritt des Ermittelns eines Druckabfalls beim Entlüftungsvorgang basierend auf einem gemessenen Zeitwert, Temperaturwert, Schalldruckwert oder Luftdruckwert.

14. Computerlesbares Speichermedium, auf dem ein auf einem Computersystem ausführbarer Programmcode gespeichert ist, der bei seiner Ausführung die Schritte eines der Verfahrensansprüche 11 bis 13 erzeugt.

15. Computerprogramm mit Codemitteln, die bei ihrer Ausführung auf einem Computersystem die Schritte eines der Verfahrensansprüche 11 bis 13 erzeugen.

## Claims

1. Device for controlling an air treatment system in a vehicle, wherein the device is configured to control a valve apparatus (60) for the repeated deactivation and re-activation of the ventilation process when successive, preferably decreasing, predetermined pressure values of the ventilation pressure are reached, and until a predetermined lower pressure limiting value is reached,
wherein
the device is configured in such a way that the reduction in pressure during the ventilation process takes place by means of at least two partial pressure ventilation processes without significant lengthening of the ventilation time.

2. Device according to Claim 1, wherein the device is configured to carry out the multiple deactivation and re-activation of the ventilation process with a timing control which is based on stored measurement data from the past.

3. Device according to Claim 1 or 2, wherein the device is configured to actuate the valve apparatus (60) by means of a time-modulated signal whose activation time corresponds to an activation period of the valve apparatus (60).

4. Device according to one of the preceding claims, also comprising a timer for measuring a time period since the start of the ventilation process, wherein the device is configured to use the measured time period to determine a drop in pressure during the ventilation process.

5. Device according to one of Claims 1 to 3, also comprising a temperature sensor for measuring a temperature which corresponds to a drop in pressure during the ventilation process, wherein the device is configured to use the measured temperature to determine the drop in pressure during the ventilation process.

6. Device according to one of Claims 1 to 3, also comprising a sound pressure sensor for measuring a sound pressure which corresponds to a drop in pressure during the ventilation process, wherein the device is configured to use the measured sound pressure to determine the drop in pressure during the ventilation process.

7. Device according to one of Claims 1 to 3, also comprising a pressure sensor for measuring an air pressure during the ventilation process, wherein the device is configured to use the measured air pressure to determine a drop in pressure during the ventilation process.

8. Device according to one of the preceding claims, wherein the device is configured to permanently activate the valve device (60) in response to the lower pressure limiting value being reached.

9. Air treatment system for a vehicle, having a device according to one of Claims 1 to 8 and the valve apparatus (60) .

10. Air treatment system according to Claim 9, wherein the valve apparatus (60) is configured to control a pressure regulator (40) for the ventilation process.

11. Method for controlling an air treatment system in a vehicle, having the step of controlling a valve apparatus (60) for the repeated deactivation and re-activation of the ventilation process when successive, preferably decreasing, predetermined pressure values of the ventilation pressure are reached, until a predetermined lower pressure limiting value is reached, wherein
the reduction in pressure during the ventilation process takes place by means of at least two partial pressure ventilation processes without significant lengthening of the ventilation time.

12. Method according to Claim 11, also comprising the step of carrying out the repeated deactivation and re-activation of the ventilation process with a timing control which is based on stored measurement data from the past.

13. Method according to Claim 11 or 12, also comprising the step of determining a drop in pressure during the ventilation process on the basis of a measured time value, temperature value, sound pressure value or air pressure value.

14. Computer-readable storage medium in which a program code which can be executed on a computer system, and which when executed generates the steps of one of the method Claims 11 to 13, is stored.

15. Computer program having code means which, when executed on a computer system, generate the steps of one of the method Claims 11 to 13.

## Revendications

1. Dispositif de commande d'un système de traitement de l'air d'un véhicule, le dispositif étant conformé pour commander un dispositif (60) de vanne pour arrêter et reprendre plusieurs fois l'opération de purge, lorsque sont atteintes des valeurs de la pression de purge déterminées à l'avance, successives, devenant de préférence plus petites jusqu'à atteindre une limite inférieure de pression déterminée à l'avance, dans lequel
le dispositif est configuré de manière à ce que la suppression de pression se produise, lors de l'opération de purge, par au moins deux purges de pression partielles, sans prolonger sensiblement le temps de purge.

2. Dispositif suivant la revendication 1, dans lequel le dispositif est conformé pour effectuer l'arrêt et la reprise multiple de l'opération de purge avec une commande dans le temps reposant sur des données de mesure du passé mises en mémoire.

3. Dispositif suivant la revendication 1 ou 2, dans lequel le dispositif est conformé pour commander le dispositif (60) de vanne au moyen d'un signal modulé dans le temps, dont le temps d'enclenchement correspond à la durée d'enclenchement du dispositif (60) de vanne.

4. Dispositif suivant l'une des revendications précédentes, comprenant, en outre, un donneur de temps pour mesurer une durée depuis le début de l'opération de purge, le dispositif étant conformé pour utiliser la durée mesurée pour déterminer une chute de pression lors de l'opération de purge.

5. Dispositif suivant l'une des revendications 1 à 3, comprenant, en outre, un capteur de température pour mesurer une température correspondant à une chute de pression lors de l'opération de purge, le dispositif étant conformé pour utiliser la température mesurée pour déterminer la chute de pression lors de l'opération de purge.

6. Dispositif suivant l'une des revendications 1 à 3, comprenant, en outre, un capteur de la pression acoustique pour mesurer une pression acoustique correspondant à une chute de pression lors de l'opération de purge, le dispositif étant conformé pour utiliser la pression acoustique mesurée pour déterminer la chute de pression lors de l'opération de purge.

7. Dispositif suivant l'une des revendications 1 à 3, comprenant, en outre, un capteur de pression pour mesurer une pression de l'air lors de l'opération de purge, le dispositif étant conformé pour utiliser la pression de l'air mesurée pour déterminer une chute de pression lors de l'opération de purge.

8. Dispositif suivant l'une des revendications précédentes, dans lequel le dispositif est conformé pour ouvrir, de manière durable, le dispositif (60) de vanne en réaction au fait qu'une limite inférieure de pression est atteinte.

9. Système de traitement d'air d'un véhicule, comprenant un dispositif suivant l'une des revendications 1 à 8 et le dispositif (60) de vanne.

10. Système de traitement de l'air suivant la revendication 9, dans lequel le dispositif (60) de vanne est conformé pour commander un régleur (40) de pression pour l'opération de purge.

11. Procédé de commande d'un système de traitement d'air d'un véhicule, comprenant le stade de commande d'un dispositif (60) de vanne pour arrêter et reprendre plusieurs fois l'opération de purge, lorsque des valeurs de la pression de purge déterminées à l'avance, successives et devenant, de préférence, plus petites, sont atteintes jusqu'à que soit atteinte une limite inférieure de pression déterminée à l'avance,
la suppression de la pression, lors de l'opération de purge, s'effectuant par au moins deux purges de pression partielles, sans prolonger sensiblement le temps de purge.

12. Procédé suivant la revendication 11, comprenant, en outre, le stade dans lequel on effectue l'arrêt et la reprise multiple de l'opération de purge par une commande de temps reposant sur des données de mesure du passé mises en mémoire.

13. Procédé suivant la revendication 11 ou 12, comprenant, en outre, le stade de détermination d'une chute de pression lors de l'opération de purge, reposant une valeur de temps, une valeur de température, une valeur de pression acoustique ou une valeur de pression d'air mesurées.

14. Support de mémoire déchiffrable par ordinateur, sur lequel est mémorisé un code de programme, qui peut être exécuté sur un système d'ordinateur et dont la réalisation produit les stades de l'une des revendications 11 à 13 de procédé.

15. Programme d'ordinateur, ayant des moyens de code, qui, lors de sa réalisation sur un système d'ordinateur, produisent les stades de l'une des revendications 11 à 13 de procédé.
